# EUROPÄISCHE PATENTSCHRIFT

(11) **EP 3 374 259 B1**
(45) Veröffentlichungstag und Bekanntmachung des Hinweises auf die Patenterteilung: **22.09.2021**
(21) Anmeldenummer: 16797457.5
(22) Anmeldetag: 11.11.2016
(51) Int. Cl.: B64C 3/42, B64C 3/56

(54) **VORRICHTUNG ZUM KLAPPEN EINER FLUGZEUGTRAGFLÄCHE**
DEVICE FOR FOLDING AN AIRCRAFT WING
DISPOSITIF PERMETTANT DE RABATTRE UNE VOILURE D'AÉRONEF

(30) Priorität: 12.11.2015 DE 102015014635
(43) Veröffentlichungstag der Anmeldung: 19.09.2018
(73) Patentinhaber: Liebherr-Aerospace Lindenberg GmbH, 88161 Lindenberg (DE)
(72) Erfinder: TRENKLE, Christian, 88171 Weiler (DE); BERGER, Lutz, 88161 Lindenberg (DE); GARDNER, Mark, J., Snohomish, WA 98296 (US); CLOUSER, Nicole, Kenmore, WA 98028 (US)
(74) Vertreter: Herrmann, Uwe
(86) Internationale Anmeldenummer: PCT/EP2016/001881
(87) Internationale Veröffentlichungsnummer: WO 2017/080665

(56) Entgegenhaltungen:
- EP-A2- 2 727 830
- US-A- 2 418 301
- US-A- 5 381 986

## Beschreibung

Die vorliegende Erfindung betrifft eine Vorrichtung zum Klappen einer Flugzeugtragfläche, insbesondere einer Flügelspitze einer Flugzeugtragfläche.

Bei neuen Flugzeugen mit aerodynamisch verbesserten langen Flügeln und einem insgesamt dünneren Flügelprofil ist die Flügelspannweite so groß, dass die zulässigen Gategrößen überschritten werden. Um weiterhin in an Flughafen vorgesehenen Gates parken zu können, werden Teile des Flugzeugflügels, insbesondere die Flügelspitzen, hochgeklappt. Durch das Klappen eines Flügelabschnitts verringert sich die Spannweite des Flugzeugs und ermöglicht weiterhin das Parken in einem normal großen Gate. Bauliche Anpassungen der Gates sind daher nicht erforderlich.

Das erste Flugzeug in der zivilen Luftfahrt, das einen solchen Klappmechanismus aufweist, ist die Boeing 777 X. Um das Klappen der Flügelspitzen zu ermöglichen, wird ein mechanisches System ähnlich dem eines Hochauftriebssystems verwendet. Nach einem Landevorgang des Flugzeugs wird vor dem Erreichen einer Gateposition an einem Flughafen ein klappbarer Flügelabschnitt aus der Hauptebene der Flugzeugtragfläche geklappt, um somit die maximale Flügelspannweite des Flugzeugs zu verringern und eine Parkposition an einem Gate einnehmen zu können.

Bei einem Ausklappen des klappbaren Flügelabschnitts zum Erreichen der maximalen Spannweite, wird der klappbare Flügelabschnitt typischerweise mit Bolzen verriegelt. Um einen problemlosen und fehlerfreien Verriegelungsvorgang zu ermöglichen, wird dabei der klappbare Flügelabschnitt definiert vorgespannt. Dabei ist es im Stand der Technik üblich, die definierte Vorspannung des klappbaren Flügelabschnitts durch eine Differenzdruckmessung an einer Hydraulikversorgung der Antriebseinheit zum Klappen des Flügelabschnitts zu bestimmen. Problematisch an diesem Vorgehen ist, dass die Differenzdruckmessung an der Hydraulikversorgung eine systeminhärente Ungenauigkeit aufweist und ein hohes Toleranzband für die definierte Vorspannung vorgesehen werden muss. Aufgrund dieser Ungenauigkeit in der Differenzdruckmessung, ergibt sich eine besonders herausfordernde Regelung für das Ausklappen des klappbaren Flügelabschnitts und einen dabei typischerweise durch einen Bolzen erfolgenden Verriegelungsvorgang. Das definierte Vorspannmoment dient dazu, dass auch bei einem stark schwingenden klappbaren Flügelabschnitt ein Verriegelungsbolzen problemlos in die verriegelte Position ausgefahren werden kann. Wird das definierte Vorspannmoment unterschritten, kann bei einem Vorhandensein ungünstiger externer Einflüsse der Verriegelungsbolzen verklemmen bzw. die Verriegelung nicht vollständig ausgeführt werden.

Die EP 2 727 830 A2 offenbart eine Vorrichtung zum Klappen einer Flugzeugtragfläche umfassend einen Scharnierbolzen, der in einem starren Flügelabschnitt gelagert und mit einem klappbaren Flügelabschnitt drehfest oder fest verbunden ist, einen Aktuator zum Antreiben des Scharnierbolzens, um den klappbaren Flügelabschnitt aus einer Flugzeugtragflächenhauptebene aus- bzw. einzuklappen, ein Anschlagelement zum Anschlagen des klappbaren Flügelabschnitts bei einem Ausklappen des klappbaren Flügelabschnitts und zum Definieren einer Endposition eines ausgeklappten Zustands des klappbaren Flügelabschnitts.

Die vorstehend aufgeführten Probleme werden durch eine Vorrichtung zum Klappen einer Flugzeugtragfläche, die die Merkmale des Anspruchs 1 umfasst, überwunden. Zudem ist die erfindungsgemäße Vorrichtung in ihrem Aufbau einfacher, weniger komplex und damit auch leichter.

Nach dem Gegenstand des Anspruchs 1 umfasst die Vorrichtung zum Klappen einer Flugzeugtragfläche, insbesondere einer Flügelspitze einer Flugzeugtragfläche, einen Scharnierbolzen, der in einem starren Flügelabschnitt lagerbar und mit einem klappbaren Flügelabschnitt drehfest oder fest verbindbar ist, einen Aktuator zum Antreiben des Scharnierbolzens, um den klappbaren Flügelabschnitt aus einer Flugzeugtragflächenhauptebene aus- bzw. einzuklappen, ein Anschlagelement zum Anschlagen des klappbaren Flügelabschnitts bei einem Ausklappen des klappbaren Flügelabschnitts und zum Definieren einer Endposition eines ausgeklappten Zustands des klappbaren Flügelabschnitts. Die Vorrichtung ist dadurch gekennzeichnet, dass sie ferner einen Sensor zum Messen eines Vorspannmoments, das bei einem Anschlagen des klappbaren Flügelabschnitts gegen das Anschlagelement auftritt, umfasst, wobei der Sensor das Vorspannmoment am Scharnierbolzen misst bzw. bestimmt.

Als Flugzeugtragfläche kommt insbesondere ein Flugzeugflügel in Frage. Der Flugzeugflügel ist dann in einen klappbaren Flügelabschnitt und in einen starren Flügelabschnitt unterteilbar.

Die Flugzeugtragflächenhauptebene ist im Wesentlichen diejenige Ebene, die durch einen ausgeklappten Zustand des klappbaren Flügelabschnitts zusammen mit dem starren Flügelabschnitt definiert wird. Befindet sich der klappbare Flügelabschnitt in der Flugzeugtragflächenhauptebene wird eine größere Flügelspannweite erreicht als in einem eingeklappten Zustand des klappbaren Flügelabschnitts.

Der Scharnierbolzen beschreibt hierbei ein drehbar gelagertes Element, bei dessen Drehung der klappbare Flügelabschnitt entsprechend mitgedreht wird. Für ein Antreiben bzw. eine Drehung des Scharnierbolzens ist ein Aktuator vorgesehen.

Ferner dazu weist die Vorrichtung ein Anschlagelement auf, das eine Endposition des klappbaren Flügelabschnitts in einem ausgeklappten Zustand definiert. Bei einem Wechsel des klappbaren Flügelabschnitts von der eingeklappten Position in die ausgeklappte Position schlägt der klappbare Flügelabschnitt bei Erreichen der ausgeklappten Position an dem Anschlagelement an. Das Anschlagelement ist daher vorzugsweise mit dem starren Flügelabschnitt in Verbindung.

Darüber hinaus weist die Vorrichtung einen Sensor zum Messen bzw. zum Bestimmen eines Vorspannmoments auf, um festzustellen mit welcher Kraft der klappbare Flügelabschnitt gegen das Anschlagelement gedrückt wird. Nach der Erfindung bestimmt oder misst der Sensor das Vorspannmoment am Scharnierbolzen.

Da der Sensor das Vorspannmoment an dem Scharnierbolzen bestimmt oder misst, kann die herkömmlicherweise verwendete Technik, das Vorspannmoment über eine Differenzdruckmessung der Hydraulikversorgung der Antriebseinheit zu bestimmen, aufgegeben werden. Dies ist insofern von Vorteil, da die herkömmlich verwendete Differenzdruckmessung gewisse Ungenauigkeiten aufweist und einen komplexen Aufbau mit sich bringt. Von daher kann durch das Messen des Vorspannmoments am Scharnierbolzen mittels des Sensors eine weniger komplexe und gewichtsmäßig leichtere Ausführung umgesetzt werden, die genauere Ergebnisse liefert.

Vorzugsweise umfasst die Vorrichtung ferner einen Sicherungsbolzen zum Verriegeln des klappbaren Flügelabschnitts in einem ausgeklappten Zustand.

Um ein ungewolltes Klappen des Flügelabschnitts während eines Flugbetriebs zu verhindern, ist ein Sicherungsbolzen vorgesehen, der den klappbaren Flügelabschnitt in seiner ausgeklappten Position verriegelt. Dabei wird der Sicherungsbolzen typischerweise nach Erreichen der ausgeklappten Position des klappbaren Flügelabschnitts in eine an dem klappbaren Flügelabschnitt vorgesehene Aufnahmeausnehmung eingeschoben, damit auch bei großen Krafteinwirkungen auf den klappbaren Flügelabschnitt ein Einklappen aus der Flugzeugtragflächenhauptebene nicht erfolgen kann.

Nach einer vorteilhaften Modifikation der Erfindung ist der Sicherungsbolzen bzw. ein die Ansteuerung des Sicherungsbolzens übernehmende Flugsteuercomputer dazu ausgelegt, das Verriegeln des klappbaren Flügelabschnitts erst auszuführen, wenn der Sensor ein vordefiniertes Vorspannmoment misst. So kann gewährleistet werden, dass auch bei einer stark schwingenden Flugzeugtragfläche der Verriegelungsbolzen problemlos in die verriegelte Position verfahren werden kann.

Nach einer weiteren Fortbildung der Erfindung dreht sich der Aktuator mit dem klappbaren Flügelabschnitt mit und stützt sich am Scharnierbolzen ab.

In einer bevorzugten Ausgestaltung der Erfindung ist der Aktuator bzw. dessen Gehäuse drehfest mit dem klappbaren Flügelabschnitt verbunden.

In einer weiteren bevorzugten Ausgestaltung der Erfindung ist die Ausgangswelle des Aktuators drehfest mit dem Scharnierbolzen verbunden und stützt sich an diesem ab.

Vorzugsweise ist der Scharnierbolzen direkt mit dem Aktuator verbunden.

Vorzugsweise ist der Sensor teilweise oder vollständig am Scharnierbolzen integriert. Hierdurch wird eine besonders kompakte und platzsparende Möglichkeit zur Bestimmung des Vorspannmoments geschaffen.

Dabei kann der Sensor ein Drehmomentsensor sein, der dazu ausgelegt ist, das Vorspannmoment, das der klappbare Flügelabschnitt gegen das Anschlagelement erzeugt, zu bestimmen. Vorzugsweise ist der Drehmomentsensor dabei ein Sensor, der das Drehmoment des Scharnierbolzens bestimmt.

Nach einer weiteren vorteilhaften Ausführung der Erfindung umfasst der Sensor zum Messen eines Vorspannmoments einen Dehnungsmessstreifen oder einen magnetostriktiven Sensor.

In einer optionalen Weiterbildung der Erfindung umfasst die Vorrichtung einen Flugsteuercomputer, der mit dem Aktuator zum Antreiben des Scharnierbolzens und dem Sensor zum Messen eines Vorspannmoments verbunden und dazu ausgelegt ist, den Aktuator so zu regeln, dass er ein vordefiniertes Vorspannmoment des klappbaren Flügelabschnitts in einem ausgeklappten Zustand erreicht. Bei Erreichen des vordefinierten Vorspannmoments kann der Verriegelungsbolzen dann ohne die Gefahr eines Verklemmens oder einer Fehlfunktion in die Verriegelungsposition verfahren werden, womit der klappbare Flügelabschnitt in seiner ausgeklappten Position fixiert wird.

Darüber hinaus betrifft die vorliegende Erfindung ein Flugzeug, das mit einer Vorrichtung zum Klappen einer Flugzeugtragfläche nach einem der vorhergehenden detailliert beschriebenen Ausführungsformen versehen ist.

In einer bevorzugten Ausführungsform der Erfindung wird demnach nach dem Herunterfahren des klappbaren Flügelabschnitts, insbesondere einer Flügelspitze, diese mit mindestens einem Bolzen verriegelt. Um den Verriegelungsvorgang möglichst fehlerfrei durchführen zu können, wird der klappbare Flügelabschnitt definiert vorgespannt. Um eine solche definierte Vorspannung sehr genau zu bestimmen, wird das Vorspannmoment an dem Scharnierbolzen bestimmt bzw. gemessen, der direkt mit dem Aktuator verbunden ist.

Nach einer bevorzugten Ausführungsform dreht sich der Aktuator zum Antreiben des Scharnierbolzens mit dem klappbaren Flügelabschnitt mit und stützt sich währenddessen am Scharnierbolzen ab. Bei einem Erreichen der Endposition des klappbaren Flügelabschnitts in einem ausgeklappten Zustand, spannt der Aktuator den klappbaren Flügelabschnitt gegen einen Endanschlag. Dadurch ist der Kraftfluss von dem Endanschlag über den Aktuator zu dem Scharnierbolzen gewährleistet. Durch einen vorzugsweise am Scharnierbolzen integrierten Sensor, der beispielsweise als Drehmomentsensor verkörpert sein kann, kann nun die Vorspannkraft, die der klappbare Flügelabschnitt gegen den Endanschlag erzeugt, bestimmt werden. Somit ist es möglich, über eine Messung des Drehmoments am Scharnierbolzen die Vorspannkraft zu ermitteln und eine gezielte Regelung des Aktuators zum Antreiben des Scharnierbolzens auf ein vordefiniertes Vorspannmoment durchzuführen. Vorzugsweise geschieht dies im Zusammenspiel mit einem Flugsteuercomputer, der sowohl mit dem Aktuator als auch mit dem Sensor zum Messen eines Vorspannmoments verbunden ist. Der Flugsteuercomputer kann dabei auch mit einem Verfahrmechanismus für die Verriegelungsbolzen gekoppelt sein.

Vorteilhaft an der Erfindung ist, dass die definierte Vorspannung als ein Moment spezifiziert ist und der Sensor eine direkte Messung des Vorspannmoments sowie eine vereinfachte Regelung des Aktuators zum Antreiben des Scharnierbolzens bzw. zum Ausführen der Klappfunktion erlaubt.

Nach einer weiteren Ausführung der Erfindung kann auch ein mit dem Sensor verbundener elektronischer Regler vorhanden sein, der das Vorspannmoment durch das Antriebssystem auf einen vordefinierten Wert regelt.

Insgesamt kann durch die Erfindung ein Antriebssystem mit einer schnelleren Regelung der Antriebsleistung erreicht werden, wie beispielsweise Hydromotoren mit verstellbarem Verdrängervolumen, Hydromotoren, die über ein elektrohydraulisches Servoventil angesteuert sind oder bürstenlosen Gleichstrommotoren.

Weitere Merkmale und Vorteile der Erfindung können anhand den nachfolgenden Figuren sowie der zugehörigen Beschreibung entnommen werden. Es zeigen:
- Fig. 1:: die Frontansicht eines Flugzeugs mit einem klappbaren Flügelabschnitt,
- Fig. 2:: ein Schaltbild zum Ansteuern eines Scharnierbolzens sowie die Messung eines Vorspannmoments gemäß dem Stand der Technik,
- Fig. 3:: die Draufsicht auf eine Flugzeugtragfläche im Übergangsbereich von einem starren zu einem klappbaren Flügelabschnitt,
- Fig. 4:: ein Prinzipbild der erfindungsgemäßen Vorrichtung, und
- Fig. 5:: eine Teilschnittansicht der vorliegenden Erfindung, die der Schnittebene A ― A aus Fig. 3 entspricht.

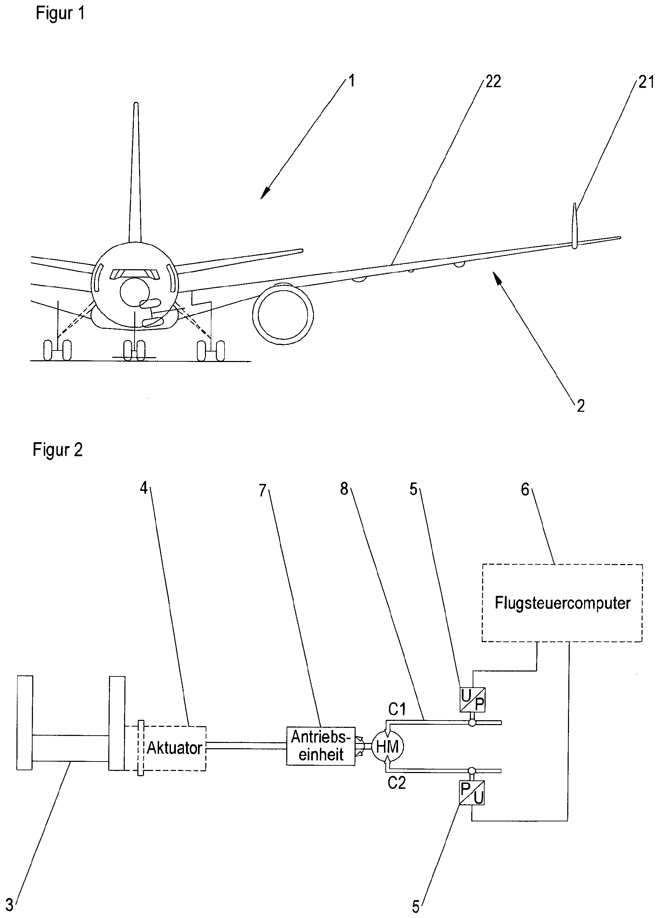

Fig. 1 zeigt ein Flugzeug 1 in einer Frontalansicht. Man erkennt die vom Hauptkörper des Flugzeugs 1 abstehende Flugzeugtragfläche 2, die in einen starren Flügelabschnitt 22 und einen klappbaren Flügelabschnitt 21 unterteilt ist. In der Figur ist der klappbare Flügelabschnitt 21 sowohl in einem ausgeklappten als auch in einem eingeklappten Zustand dargestellt. Das Einklappen des klappbaren Flügelabschnitts 21 führt zu einer Verringerung der Flügelspannweite des Flugzeugs 1, wodurch normal breite Gates an Flughafen auch mit Flugzeugen 1 angefahren werden können, die eine die maximal zulässige Spannweite eines Gates übertreffende Flügelspannweite aufweisen. Bauliche Änderungen an Flughäfen sind daher nicht erforderlich.

Die Flugzeugtragflächenhauptebene ist diejenige Ebene, die durch den starren Flügelabschnitt 22 und den klappbaren Flügelabschnitt 21 gebildet wird, wenn sich der klappbare Flügelabschnitt 21 in einem ausgeklappten Zustand befindet. Der ausgeklappte Zustand definiert dabei im Wesentlichen eine homogene Fortführung des starren Flügelabschnitts 22. Im Gegensatz dazu ist der eingeklappte Zustand des klappbaren Flügelabschnitts 21 eine diskontinuierliche Fortführung des Flügels im Vergleich zu dem starren Flügelabschnitt 22. Dem Fachmann ist klar, dass es für die Vorteile der Erfindung von untergeordneter Wichtigkeit ist, ob der klappbare Flügelabschnitt 21 nach oben oder nach unten aus der Flugzeugtragflächenhauptebene geklappt wird. Von daher umfasst die vorliegende Erfindung beide Varianten.

Fig. 2 zeigt eine Vorrichtung zum Klappen einer Flugzeugtragfläche, die aus dem Stand der Technik bekannt ist. Man erkennt einen Scharnierbolzen 3, der über einen Aktuator 4 rotiert werden kann. Bei der Rotation des Scharnierbolzens 3 wird ein mit dem Scharnierbolzen 3 in Verbindung stehender klappbarer Flügelabschnitt bewegt. Die Antriebseinheit 7 steht mit dem Aktuator 4 in Verbindung, vorzugsweise über eine Welle und/oder ein Getriebe. Die Antriebseinheit 7 ist eine Power Drive Unit (PDU) und wird dazu verwendet, hydraulische Leistung in eine mechanische Bewegung, vorzugsweise eine mechanische Drehbewegung, umzuwandeln und den mechanischen Aktuator 4 anzutreiben. Die Antriebseinheit 7 wird selbst durch die Hydraulikversorgung 8 gesteuert, die mithilfe von Sensoren 5 zur Differenzdruckmessung einen Rückschluss auf die Parameter der Antriebseinheit 7 zulassen. Die Sensoren 5 sind dabei mit einem Flugsteuercomputer 6 verbunden, der mithilfe der von den Sensoren 5 gemessenen Werte auf eine definierte Vorspannung des klappbaren Flügelabschnitts gegen ein Anschlagelement schließen kann.

Nachteilhaft hieran ist, dass dieses Messprinzip ungenau ist und ein großes Toleranzband aufweist.

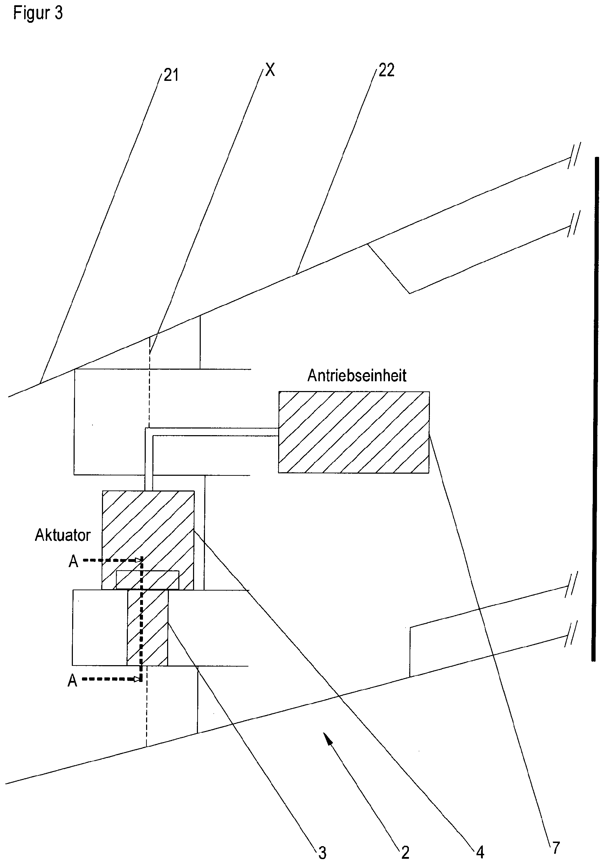

Fig. 3 zeigt eine Draufsicht auf eine Flugzeugtragfläche 2 in einem Übergangsbereich von einem starren Flügelabschnitt 22 zu einem klappbaren Flügelabschnitt 21. Mit X ist die Schwenkachse des klappbaren Flügelabschnitts 21 dargestellt. Man erkennt, dass die Schwenkachse X durch den Scharnierbolzen 3 verläuft, der drehbar in dem starren Flügelabschnitt 22 und fest in dem klappbaren Flügelabschnitt 21 gelagert ist. Bei einem Drehen des Aktuators 4 dreht sich also der klappbare Flügelabschnitt 21 entsprechend mit. Ferner erkennt man, dass der Aktuator 4 direkt an dem Scharnierbolzen 3 angeordnet ist und ebenfalls in der Schwenkachse X liegt. Vorteilhafterweise ist der Aktuator zylinderförmig ausgestaltet und liegt mit seiner Rotationsachse koachsial zur Schwenkachse X. Diese Anordnung führt zu einem geringeren Gewicht, das bei einem Drehen des kippbaren Flügelabschnitts 21 gedreht werden muss und nimmt insbesondere wenig Platz ein.

Man erkennt zudem, dass die Antriebseinheit 7 sich in dem starren Flügelabschnitt 22 befindet und den Aktuator über ein Getriebe antreibt.

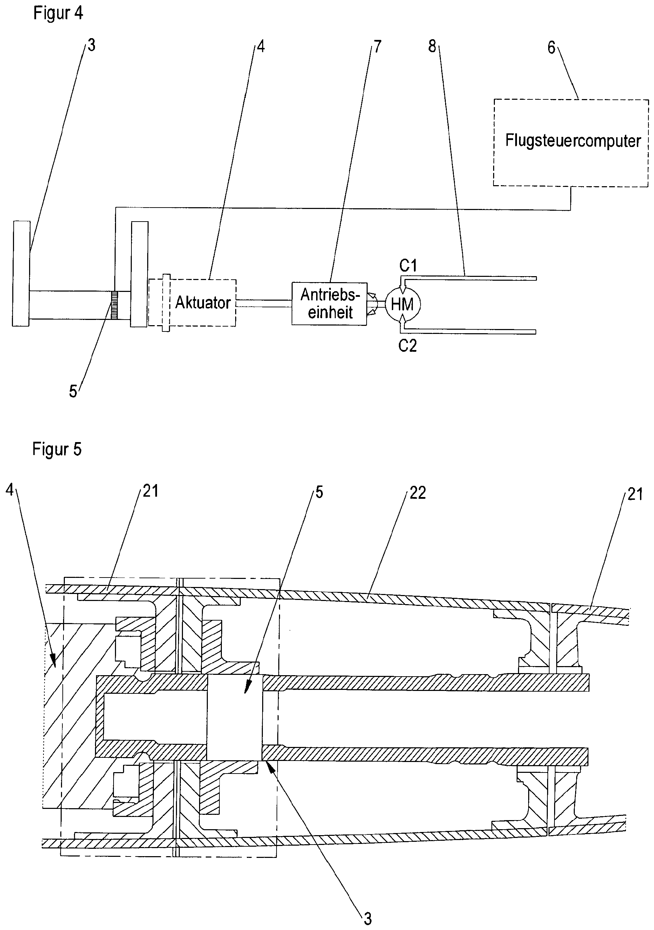

Fig. 4 zeigt das Prinzipbild der vorliegenden Erfindung, bei der der Sensor 5 zum Messen eines Vorspannmoments, das bei einem Anschlagen des klappbaren Flügelabschnitts 21 gegen das Anschlagelement auftritt, am Scharnierbolzen 3 angeordnet ist. Die Bestimmung des Vorspannmoments erfolgt demnach nicht mehr, wie im Stand der Technik üblich, mithilfe einer Differenzdruckmessung an der Hydraulikversorgung 8 der Antriebseinheit 7, sondern direkt am Scharnierbolzen 3. Die durch den Sensor 5 bestimmten Werte werden über eine Verbindung an den Flugsteuercomputer 6 weitergegeben.

Der Flugsteuercomputer 6 kann demnach dieses Drehmoment sehr genau aufnehmen und mit einem Sollwert vergleichen. Da der Flugsteuercomputer 6 vorzugsweise auch mit der Antriebseinheit 7 bzw. der Hydraulikversorgung 8 in Verbindung steht, kann eine sehr genaue Regelung vorgenommen werden, die sich sehr nahe im Bereich des gewünschten Vorspannmoments befindet. Zudem ist aufgrund des direkt am Scharnier 3 gemessenen Moments eine schnellere Regelung möglich, da die Informationen über das Vorspannmoment nicht erst vom Scharnierbolzen 3 über den Aktuator 4, die Antriebseinheit 7 und die Hydraulikversorgung 8 dem Flugsteuercomputer zugeführt werden.

Fig. 5 zeigt eine Schnittansicht entsprechend dem Schnitt A ― A aus Fig. 3. Man erkennt eine von links nach rechts aufeinander zulaufende Gesamtsilhouette des Flügels, wie sie für den Mittelteil des Flügels typisch ist. Zudem erkennt man einen Teil des Aktuators 4, der in dem klappbaren Flügelabschnitt 21 angeordnet ist. Der Scharnierbolzen 3 erstreckt sich ausgehend von dem starren Flügelabschnitt 22 in den klappbaren Flügelabschnitt 21 hinein und ist mit diesem drehfest verbunden. Der Sensor 5, der das Vorspannmoment am Scharnierbolzen 3 misst, ist im starren Flügelabschnitt 22 angeordnet.

## Patentansprüche

1. Vorrichtung zum Klappen einer Flugzeugtragfläche (2), insbesondere einer Flügelspitze einer Flugzeugtragfläche (2), umfassend:
einen Scharnierbolzen (3), der in einem starren Flügelabschnitt (22) lagerbar und mit einem klappbaren Flügelabschnitt (21) drehfest oder fest verbindbar ist,
einen Aktuator (4) zum Antreiben des Scharnierbolzens (3), um den klappbaren Flügelabschnitt (21) aus einer Flugzeugtragflächenhauptebene aus- bzw. einzuklappen,
ein Anschlagelement zum Anschlagen des klappbaren Flügelabschnitts (21) bei einem Ausklappen des klappbaren Flügelabschnitts (21) und zum Definieren einer Endposition eines ausgeklappten Zustands des klappbaren Flügelabschnitts (21),
**dadurch gekennzeichnet, dass**
die Vorrichtung ferner einen Sensor (5) zum Messen eines Vorspannmoments, das bei einem Anschlagen des klappbaren Flügelabschnitts (21) gegen das Anschlagelement auftritt, umfasst, wobei
der Sensor (5) das Vorspannmoment am Scharnierbolzen (3) misst.

2. Vorrichtung nach Anspruch 1, ferner umfassend einen Sicherungsbolzen zum Verriegeln des klappbaren Flügelabschnitts (21) in einem ausgeklappten Zustand.

3. Vorrichtung nach Anspruch 2, wobei der Sicherungsbolzen dazu ausgelegt ist, das Verriegeln des klappbaren Flügelabschnitts (21) erst auszuführen, wenn der Sensor (5) ein vordefiniertes Vorspannmoment misst.

4. Vorrichtung nach einem der vorhergehenden Ansprüche, wobei sich im eingebauten Zustand der Aktuator (4) mit dem klappbaren Flügelabschnitt (21) mitdreht und sich am Scharnierbolzen (3) abstützt.

5. Vorrichtung nach einem der vorhergehenden Ansprüche, wobei der Scharnierbolzen (3) direkt mit dem Aktuator (4) verbunden ist.

6. Vorrichtung nach einem der vorhergehenden Ansprüche, wobei der Sensor (5) teilweise oder vollständig am Scharnierbolzen (3) integriert ist:

7. Vorrichtung nach einem der vorhergehenden Ansprüche, wobei der Sensor (5) ein Drehmomentsensor ist, der dazu ausgelegt ist, das Vorspannmoment, das der klappbare Flügelabschnitt (21) gegen das Anschlagelement erzeugt, zu bestimmen.

8. Vorrichtung nach einem der vorhergehenden Ansprüche, wobei der Sensor (5) zum Messen eines Vorspannmoments einen Dehnungsmessstreifen oder einen magnetostriktiven Sensor umfasst.

9. Vorrichtung nach einem der vorhergehenden Ansprüche, ferner umfassend einen Flugsteuercomputer (6), der mit dem Aktuator (4) zum Antreiben des Scharnierbolzens (3) und dem Sensor (5) zum Messen eines Vorspannmoments verbunden und dazu ausgelegt ist, den Aktuator (4) so zu regeln, dass er ein vordefiniertes Vorspannmoment des klappbaren Flügelabschnitts (21) in einem ausgeklappten Zustand erreicht.

10. Flugzeug (1), das mit einer Vorrichtung zum Klappen einer Flugzeugtragfläche (2) nach einem der vorhergehenden Ansprüche versehen ist.

## Claims

1. An apparatus for folding an airplane wing (2), in particular a wing tip of an airplane wing (2), comprising:
a hinge pin (3) which is supportable in a rigid wing section (22) and is rotationally fixedly or fixedly connectable to a folding wing section (21);
an actuator (4) for driving the hinge pin (3) to fold the folding wing section (21) out of or into a main plane of the airplane wing; and
an abutment element for the abutment of the folding wing section (21) on a folding out of the folding wing section (21) and for defining an end position of a folded-out state of the folding wing section (21),
**characterized in that**
the apparatus further comprises a sensor (5) for measuring a preload torque which occurs on an abutment of the folding wing section against the abutment element, with the sensor (5) measuring the preload torque at the hinge pin (3).

2. An apparatus in accordance with claim 1, further comprising a securing pin for locking the folding wing section (21) in a folded-out state.

3. An apparatus in accordance with claim 2, wherein the securing pin is configured only to carry out the locking of the folding wing section (21) when the sensor (5) measures a predefined preload torque.

4. An apparatus in accordance with one of the preceding claims, wherein the actuator (4) co-rotates with the folding wing section (21) and is supported at the hinge pin (3) in the installed state.

5. An apparatus in accordance with one of the preceding claims, wherein the hinge pin (3) is directly connected to the actuator (4).

6. An apparatus in accordance with one of the preceding claims, wherein the sensor (5) is partly or completely integrated at the hinge pin (3).

7. An apparatus in accordance with one of the preceding claims, wherein the sensor (5) is a torque sensor which is configured to determine the preload torque which the folding wing section (21) generates against the abutment element.

8. An apparatus in accordance with one of the preceding claims, wherein the sensor (5) for measuring a preload torque comprises a strain gauge or a magnetorestrictive sensor.

9. An apparatus in accordance with one of the preceding claims, further comprising a flight control computer (9) which is connected to the actuator (4) for driving the hinge pin (3) and to the sensor (5) for measuring a preload torque and which is configured to regulate the actuator (4) such that it reaches a predefined preload torque of the folding wing section (21) in a folded-out state.

10. An airplane (1) which is provided with an apparatus for folding an airplane wing (2) in accordance with one of the preceding claims.

## Revendications

1. Dispositif permettant de rabattre une voilure d'aéronef (2), en particulier un bout d'aile d'une voilure d'aéronef (2), comprenant :
un axe de charnière (3), qui peut être monté dans une partie d'aile rigide (22) et être relié fixement ou de manière solidaire en rotation à une partie d'aile rabattable (21),
un actionneur (4) destiné à entraîner l'axe de charnière (3), pour rabattre vers l'extérieur ou vers l'intérieur la partie d'aile rabattable (21) depuis un plan principal de voilure d'aéronef,
un élément de butée sur lequel la partie d'aile rabattable (21) vient en butée lors d'un rabattement vers l'extérieur de la partie d'aile rabattable (21) et
destiné à définir une position de fin de course d'un état rabattu vers l'extérieur de la partie d'aile rabattable (21),
**caractérisé en ce que**
le dispositif comprend en outre un capteur (5) destiné à mesurer un couple de précontrainte qui se produit lorsque la partie d'aile rabattable (21) vient en butée contre l'élément de butée, dans lequel
le capteur (5) mesure le couple de précontrainte sur l'axe de charnière (3).

2. Dispositif selon la revendication 1, comprenant en outre un boulon de fixation destiné à verrouiller la partie d'aile rabattable (21) dans un état rabattu vers l'extérieur.

3. Dispositif selon la revendication 2, dans lequel le boulon de fixation est conçu pour exécuter le verrouillage de la partie d'aile rabattable (21) uniquement quand le capteur (5) mesure un couple de précontrainte prédéfini.

4. Dispositif selon l'une des revendications précédentes, dans lequel, dans l'état monté, l'actionneur (4) tourne avec la partie d'aile rabattable (21) et s'appuie sur l'axe de charnière (3).

5. Dispositif selon l'une des revendications précédentes, dans lequel l'axe de charnière (3) est relié directement à l'actionneur (4).

6. Dispositif selon l'une des revendications précédentes, dans lequel le capteur (5) est partiellement ou entièrement intégré à l'axe de charnière (3).

7. Dispositif selon l'une des revendications précédentes, dans lequel le capteur (5) est un capteur de couple, qui est conçu pour déterminer le couple de précontrainte que la partie d'aile rabattable (21) génère contre l'élément de butée.

8. Dispositif selon l'une des revendications précédentes, dans lequel le capteur (5) destiné à mesurer un couple de précontrainte comprend une jauge extensométrique ou un capteur magnétostrictif.

9. Dispositif selon l'une des revendications précédentes, comprenant en outre un ordinateur de commande de vol (6), qui est relié à l'actionneur (4) destiné à entraîner l'axe de charnière (3) et au capteur (5) destiné à mesurer un couple de précontrainte et qui est conçu pour régler l'actionneur (4) de telle manière qu'il atteint un couple de précontrainte prédéfini de la partie d'aile rabattable (21) dans un état rabattu vers l'extérieur.

10. Aéronef (1), qui est pourvu d'un dispositif permettant de rabattre une voilure d'aéronef (2) selon l'une des revendications précédentes.
